# EUROPÄISCHE PATENTSCHRIFT

(11) **EP 2 734 919 B1**
(45) Veröffentlichungstag und Bekanntmachung des Hinweises auf die Patenterteilung: **04.09.2019**
(21) Anmeldenummer: 12733706.1
(22) Anmeldetag: 09.07.2012
(51) Int. Cl.: G06F 8/65

(54) **STEUERVORRICHTUNG FÜR EIN KRAFTFAHRZEUG, PROGRAMMIERVORRICHTUNG UND PROGRAMMIERSYSTEM**
CONTROL UNIT FOR A VEHICLE, PROGRAMMING DEVICE AND PROGRAMMING SYSTEM
UNITÉ DE CONTRÔLE POUR UN VÉHICULE, DISPOSITIF DE PROGRAMMATION ET SYSTÈME DE PROGRAMMATION

(30) Priorität: 19.07.2011 DE 102011079399
(43) Veröffentlichungstag der Anmeldung: 28.05.2014
(73) Patentinhaber: Bayerische Motoren Werke Aktiengesellschaft, 80809 München (DE)
(72) Erfinder: PIETSCHMANN, Ingolf, 85276 Pfaffenhofen (DE)
(86) Internationale Anmeldenummer: PCT/EP2012/063394
(87) Internationale Veröffentlichungsnummer: WO 2013/010846

(56) Entgegenhaltungen:
- WO-A2-2010/143910
- DE-A1-102009 018 761
- FR-A1- 2 837 946
- US-A1- 2006 106 806
- US-A1- 2010 234 008
- US-B1- 7 594 017

## Beschreibung

Die Erfindung betrifft eine Steuervorrichtung für ein Kraftfahrzeug, eine Programmiervorrichtung und ein Programmiersystem.

Moderne Kraftfahrzeuge weisen eine Vielzahl von programmgesteuerten Steuergeräten auf. Die Steuergeräte umfassen meistens einen Programmspeicher, der in einem eingebauten Zustand des Steuergeräts programmiert werden kann. Bei heutigen Steuergeräten ist der Programmspeicher häufig als Flash-Speicher ausgebildet. Flash-Speicher sind nichtflüchtige Speicherbausteine, bei denen unbeschriebene oder gelöschte Zellen jederzeit beschrieben werden können, bei denen das Löschen von Zellen aber nur segmentweise möglich ist. Die Steuergeräte weisen häufig eine Diagnoseschnittstelle auf, über die das Steuergerät mit einer fahrzeugunabhängigen Diagnose- und/oder Testvorrichtung koppelbar ist. Bei einer Neuprogrammierung der Steuergeräte wird mittels der Diagnose- und/oder Testvorrichtung jeweils eine neue Version der Steuergerätesoftware, zum Beispiel ein Firmware-Programm, in das Steuergerät geladen.

Mit steigender Funktionalität der Steuergeräte und einer wachsenden Anzahl von unterschiedlichen Steuergeräten nimmt auch die Anzahl der Softwarevarianten, die für die Kraftfahrzeuge beziehungsweise die Steuergeräte bereitgestellt werden müssen, erheblich zu.

Die US 2006/106806 beschreibt ein Verfahren zum Aktualisieren von auf einem Mobilgerät befindlicher Software, umfassend: Abrufen von Aktualisierungsinformationen von einem Server, wobei die Aktualisierungsinformationen eine Kennung für jedes einer Vielzahl von Software-Aktualisierungen enthalten; Auswählen, basierend auf den Aktualisierungsinformationen und der residenten Software, mindestens eines der Software-Updates; und Herunterladen der ausgewählten Software-Updates.

DE 10 2009 018 761 A1 offenbart ein Verfahren zur Aktualisierung zumindest einer Softwarekomponente eines Kraftfahrzeugs. Das Verfahren umfasst die Schritte:
- Ermittlung von Fahrzeugkonfigurationsinformation, die zumindest die Information umfasst, welche Hardwarekomponenten und/oder welche Softwarekomponenten im konkreten Kraftfahrzeug vorhanden sind, durch eine Zustandsermittlungs-Vorrichtung;
- Bereitstellen einer Telekommunikationsverbindung zwischen einer fahrzeuginternen Service-Schnittstelle und einer fahrzeugexternen Service-Einrichtung;
- Versenden der von der Zustandsermittlungs-Vorrichtung ermittelten Fahrzeugkonfigurationsinformation sowie von Identifikationsdaten des betreffenden Kraftfahrzeugs vom Kraftfahrzeug über die Telekommunikationsverbindung an die fahrzeugexterne Service-Einrichtung;
- Prüfung anhand der Fahrzeugkonfigurationsinformation durch die fahrzeugexterne Service-Einrichtung, ob eine oder mehrere Softwarekomponenten gemäß einer bei der fahrzeugexternen Service-Einrichtung verfügbaren Kontrollvorschrift zu aktualisieren ist;
- Bereitstellen einer entsprechenden Aktualisierungsvorschrift durch die fahrzeugexterne Service-Einrichtung und
- Aktualisierung der zu aktualisierenden Softwarekomponente anhand der Aktualisierungsvorschrift (siehe Zusammenfassung) .

FR 2 837 946 A1 offenbart ein System zum Herunterladen zumindest einer Datei in zumindest einen Rechner, der zur Steuerung eines Funktionsaggregates ausgebildet ist. Das System weist eine Downloadeinheit auf, die Mittel zur Akquisition der besagten herunterzuladenden Datei umfasst und die Mittel umfasst zur Kompression dieser Datei und Mittel zum Senden der komprimierten Datei an eine Empfangseinheit, die korrespondierend verbunden ist mit einer Ladeeinheit an Bord des Fahrzeugs. Die Ladeeinheit umfasst Mittel zur Dekompression der empfangenen komprimierten Datei und Mittel zum Speichern der dekomprimierten Datei in den Rechner zur Steuerung des Funktionsaggregats.

Die Aufgabe, die der Erfindung zugrunde liegt, ist, eine Steuervorrichtung für ein Kraftfahrzeug, eine Programmiervorrichtung und ein Programmiersystem zu schaffen, die eine flexible und/oder zuverlässige Programmierung der Steuervorrichtung ermöglichen.

Die Aufgabe wird gelöst durch die Merkmale der unabhängigen Ansprüche. Vorteilhafte Ausgestaltungen der Erfindung sind in den Unteransprüchen angegeben.

Gemäß einem ersten Aspekt zeichnet sich die Erfindung aus durch eine Steuervorrichtung für ein Kraftfahrzeug mit einer Recheneinheit, wobei die Recheneinheit ausgebildet ist, ein oder mehrere Steuerprogramme auszuführen. Ferner umfasst die Steuervorrichtung zumindest eine Kommunikationsschnittstelle zum Senden und Empfangen von Daten und einen Programmspeicher zum Speichern von Programmdaten der jeweiligen Steuerprogramme. Die Steuervorrichtung ist ausgebildet, eine an der Kommunikationsschnittstelle bereitgestellte Programmdatenaktualisierungsaufforderung für zumindest ein zu aktualisierendes Steuerprogramm auszuwerten. Hierbei umfasst die Programmdatenaktualisierungsaufforderung zumindest eine Adresse einer von der Steuervorrichtung unabhängigen externen Datenquelle, von der jeweils aktuelle Programmdaten des zu aktualisierenden Steuerprogramms angefordert werden können. Des Weiteren ist die Steuervorrichtung ausgebildet, eine Programmdatenanforderung für die jeweiligen aktuellen Programmdaten an die externe Datenquelle über die Kommunikationsschnittstelle und/oder über eine zweite Kommunikationsschnittstelle auszugeben. Die Steuervorrichtung ist ferner ausgebildet, die Programmdaten der jeweiligen Steuerprogramme, die in Antwort auf die Programmdatenanforderung an der Kommunikationsschnittstelle und/oder der zweiten Kommunikationsschnittstelle anliegen, einzulesen und in dem Programmspeicher abzuspeichern.

Vorteilhafterweise ermöglicht dies eine sehr flexible Programmierung der Steuervorrichtung. Programmierung ist hierbei im Sinne eines Einbringens eines oder mehrerer Steuerprogramme in die Steuervorrichtung zu verstehen, derart, dass die Steuervorrichtung das jeweilige Steuerprogramm ausführen kann. Die für die Programmierung der jeweiligen Steuervorrichtungen benötigten Programmdaten der Steuerprogramme können von verschiedenen Quellen bereitgestellt werden. Dies ermöglicht, dass mehrere Steuervorrichtungen sehr schnell gleichzeitig programmiert werden können, da die Daten nicht ausschließlich von einer und/oder über eine Quelle, zum Beispiel einer geeignet ausgebildeten Programmiervorrichtung bereitgestellt werden müssen.

In einer vorteilhaften Ausgestaltung umfasst die Steuervorrichtung eine Speicherverwaltungseinheit. Die Speicherverwaltungseinheit ist ausgebildet, einen Speicherbereich zu ermitteln für die Programmdaten der jeweiligen Steuerprogramme, die über die Kommunikationsschnittstelle und/oder die zweite Kommunikationsschnittstelle eingelesen werden. Ferner ist die Speicherverwaltungseinheit ausgebildet, die Programmdaten in dem ermittelten Speicherbereich abzuspeichern und die Programmdaten der Recheneinheit zur Ausführung bereitzustellen. Vorteilhafterweise ermöglicht dies ein flexibles Verwalten von Speichereinheiten der Steuervorrichtung. Das Ermitteln des Speicherbereichs und das Abspeichern der Programmdaten kann hierbei auch umfassen, dass die Steuervorrichtung ausgebildet ist, weitere Schritte in Vorbereitung und/oder Nachbereitung des Abspeicherns beziehungsweise des Bereitstellens der Programmdaten auszuführen, zum Beispiel eine Initialisierung und/oder eine Indizierung und/oder ein Vermerken von Konfigurationsdaten. Die Steuervorrichtung kann abhängig von einer freien Speicherkapazität und/oder einer Speicherausbildung, zum Beispiel als Flash-Speicher oder als Random Access Memory, eine Speicherung der Programmdaten steuern. Das Abspeichern der Programmdaten kann unabhängig von einer Speichersteuerung durch die Datenquelle erfolgen, die die Programmdaten bereitstellt, zum Beispiel unabhängig von der Programmiervorrichtung. Es ist nicht erforderlich, dass die Datenquelle und/oder die Programmiervorrichtung die Speicherkonfiguration der jeweiligen Steuervorrichtung kennt und/oder geeignet ausgebildet ist, die Speicherkonfiguration der Steuervorrichtung zu ermitteln. Aufgrund der Vielzahl der verschiedenen Steuervorrichtungen kann diese einen erheblichen Beitrag leisten, Kosten einzusparen, insbesondere bei einer Wartung der Steuervorrichtungen. Die Ausbildung der Steuervorrichtung mit einer Speicherverwaltungseinheit hat ferner den Vorteil, dass beispielsweise die Programmdaten vor einer Übertragung zu der Steuervorrichtung derart geändert und/oder erweitert werden können, dass die Übertragung sicher und/oder schneller erfolgen kann. In der Steuervorrichtung können die Programmdaten unter Nutzung der Speicherverwaltung und/oder weiterer Module wieder in ihr Ausgangsformat überführt werden. Beispielsweise können die Programmdaten kodiert übertragen werden. Die Steuervorrichtung kann ausgebildet sein, mehrere Steuerprogramme quasi parallel auszuführen. Die Steuerprogramme können, beispielsweise abhängig von einer vorgegebenen Priorität für das jeweilige Steuerprogramm, zu unterschiedlichen Laufzeiten zumindest teilweise ausgeführt werden, d. h. zu unterschiedlichen Zeitpunkten und für unterschiedliche Zeitspannen. Die Speicherverwaltung kann hierbei ausgebildet sein, die jeweiligen Programmdaten der Recheneinheit zu den Laufzeiten des jeweiligen Steuerprogramms zur Ausführung bereitzustellen. Die Laufzeiten können beispielsweise abhängig von den Prioritäten ermittelt werden.

In einer weiteren vorteilhaften Ausgestaltung ist die Steuervorrichtung ausgebildet, für eine Programmierung der Steuervorrichtung mit Programmdaten, die in dem Programmspeicher vorgegeben abgespeichert werden, eine vorgegebene Menge an Protokollen zu unterstützen. Die Steuervorrichtung ist ausgebildet, eine weitere Programmdatenaktualisierungsaufforderung für zumindest ein zu aktualisierendes Steuerprogramm, die an der Kommunikationsschnittstelle bereitgestellt wird, einzulesen und auszuwerten, wobei die weitere Programmdatenaktualisierungsaufforderung zumindest einen ersten Indikator umfasst, der mögliche Protokolle repräsentiert, die für das Programmieren mit aktualisierten Programmdaten des jeweiligen Steuerprogramms genutzt werden können. Die Steuervorrichtung ist ferner ausgebildet, jeweils abhängig von dem ersten Indikator einen zweiten Indikator zu ermitteln, der das Protokoll aus der Menge an Protokollen repräsentiert, welches für das Programmieren der Steuervorrichtung mit den Programmdaten des zu aktualisierenden Steuerprogramms genutzt werden soll. Die Steuervorrichtung ist ausgebildet, in Antwort auf die weitere Programmdatenaktualisierungsaufforderung eine weitere Programmdatenanforderung, die den zweiten Indikator umfasst, über die Kommunikationsschnittstelle zu versenden.

Ein mögliches Protokoll, das für die Programmierung der Steuervorrichtung genutzt werden kann, ist das Unified Diagnostic Services Protokoll (UDS-Protokoll). Das UDS-Protokoll ist ein Kommunikationsprotokoll, das für Kraftfahrzeuge entwickelt wurde und das eine Kommunikation zwischen der jeweiligen Steuervorrichtung und einer fahrzeugexternen Einheit ermöglicht. Das jeweilige Kraftfahrzeug kann hierzu eine Diagnoseschnittstelle aufweisen, die es ermöglicht, die Einheit mit einem Fahrzeugdatenbus zu koppeln. Damit ist es zum Beispiel möglich, einen Fehlerspeicher der jeweiligen Steuervorrichtung abzufragen und/oder ein oder mehrere Steuerprogramme, insbesondere eine aktuelle Firmware in den Programmspeicher zu laden. Das UDS-Protokoll kann für einfachere Steuervorrichtungen genutzt werden, die beispielsweise einen Mikrocontroller aufweisen und/oder als eingebettetes System (englisch embedded system) ausgebildet sind. Mit zunehmender Funktionalität und Komplexität der Steuervorrichtungen, die beispielsweise einen oder mehrere Prozessoren und/oder eine andere Programmspeicherstruktur aufweisen, kann es erforderlich sein, andere Protokolle zur Programmierung der Steuervorrichtung zu nutzen, um eine zuverlässige Programmierung zu ermöglichen. Eine Vorgabe des Protokolls durch die Steuervorrichtung ermöglicht, dass abhängig von einer vorgegebenen Hard- und Softwareplattform der Steuervorrichtung das Protokoll geeignet ausgewählt werden kann, sodass eine zuverlässige, flexible und/oder schnelle Programmierung der Steuervorrichtung möglich ist. Hierbei kann die Steuervorrichtung ausgebildet sein, die Programmdaten von einer geeignet ausgebildeten Programmiervorrichtung, die über die Kommunikationsschnittstelle mit der Steuervorrichtung gekoppelt ist, direkt zu empfangen und/oder von einer externen Datenquelle herunterzuladen oder anzufordern unter Verwendung einer Adresse für einen Verbindungsaufbau zwischen der Steuervorrichtung und der externen Datenquelle. Die Programmdatenaktualisierungsaufforderung und die weitere Programmdatenaktualisierungsaufforderung können auch zu einer Aufforderung zusammengefasst werden. Auch die Programmdatenanforderung und die weitere Programmdatenanforderung können zu einer Anforderung zusammengefasst werden.

In einer weiteren vorteilhaften Ausgestaltung ist die Steuervorrichtung ausgebildet, vorgegeben komprimierte Programmdaten, die über die Kommunikationsschnittstelle und/oder die zweite Kommunikationsschnittstelle eingelesen werden, als solche zu erkennen und die komprimierten Programmdaten zu dekomprimieren. Dies hat den Vorteil, dass eine Übertragungszeitdauer für die Programmdaten zu der Steuervorrichtung verkürzt werden kann. Die Kompression hat den Vorteil, dass die zu übertragende Datenmenge für die Programmdaten wesentlich geringer ist. Dies kann einen Beitrag leisten, eine Fehlerwahrscheinlichkeit bei der Übermittlung zu reduzieren.

In einer weiteren vorteilhaften Ausgestaltung ist die Steuervorrichtung ausgebildet, eine Containerdatei, die eine oder mehrere Dateien mit Programmdaten umfasst und die über die Kommunikationsschnittstelle und/oder die zweite Kommunikationsschnittstelle eingelesen wird, als solche zu erkennen, und die Dateien aus der Containerdatei zu extrahieren. Dies ermöglicht, dass die Daten komprimiert übertragen werden können. Alternativ oder zusätzlich kann die Containerdatei verschlüsselt übertragen und/oder passwortgeschützt übertragen werden.

Gemäß einem zweiten Aspekt zeichnet sich die Erfindung aus durch eine Programmiervorrichtung für zumindest eine Steuervorrichtung eines Kraftfahrzeugs. Die Programmiervorrichtung weist eine weitere Kommunikationsschnittstelle auf, über die die Programmiervorrichtung koppelbar ist mit der jeweiligen Steuervorrichtung. Die Programmiervorrichtung ist ausgebildet, eine Programmversion zumindest eines Steuerprogramms der jeweiligen Steuervorrichtung, mit der sie gekoppelt ist, abzufragen, und wenn sie erkennt, dass das zumindest eine Steuerprogramm nicht in einer vorgegebenen Programmversion in der Steuervorrichtung abgespeichert ist, eine Programmdatenaktualisierungsaufforderung über die weitere Kommunikationsschnittstelle an die jeweilige Steuervorrichtung zu senden. Hierbei umfasst die Programmdatenaktualisierungsaufforderung zumindest eine Adresse einer von der Steuervorrichtung unabhängigen externen Datenquelle, von der jeweils aktuelle Programmdaten des zu aktualisierenden Steuerprogramms angefordert werden können.

Die Programmiervorrichtung kann hierbei ausgebildet sein, die Programmversion direkt von der Steuervorrichtung abzufragen und/oder von der Steuervorrichtung eine Übermittlung eines Inhalts eines vorgegebenen Speicherbereichs anzufordern.

In einer vorteilhaften Ausgestaltung ist die Programmiervorrichtung ausgebildet, wenn sie erkennt, dass das zumindest eine Steuerprogramm nicht in einer vorgegebenen Programmversion in der Steuervorrichtung abgespeichert ist, eine weitere Programmdatenaktualisierungsaufforderung für zumindest das eine zu aktualisierende Steuerprogramm über die weitere Kommunikationsschnittstelle an die jeweilige Steuervorrichtung zu senden. Hierbei umfasst die weitere Programmdatenaktualisierungsaufforderung zumindest einen ersten Indikator, der mögliche Protokolle repräsentiert, die für das Programmieren mit aktualisierten Programmdaten des jeweiligen Steuerprogramms genutzt werden können. Die Programmiervorrichtung ist ferner ausgebildet, eine in Antwort auf die weitere Programmdatenaktualisierungsaufforderung an der weiteren Kommunikationsschnittstelle bereitgestellte weitere Programmdatenanforderung auszuwerten, wobei die weitere Programmdatenanforderung einen zweiten Indikator umfasst, der ein von der jeweiligen Steuervorrichtung ausgewähltes Protokoll repräsentiert. Die Programmiervorrichtung ist ferner ausgebildet, abhängig von dem Auswerteergebnis die Programmierung mit den aktuellen Programmdaten gemäß dem jeweils ausgewählten Protokoll mittelbar und/oder direkt bereitzustellen.

Bei einer direkten Bereitstellung werden die Programmdaten von der Programmiervorrichtung bereitgestellt und an die Steuervorrichtung gesendet. Bei einer mittelbaren Bereitstellung teilt die Programmiervorrichtung der Steuervorrichtung eine Adresse einer Datenquelle mit, von der die Steuervorrichtung die Programmdaten anfordern und/oder herunterladen kann.

In einer weiteren vorteilhaften Ausgestaltung ist die Programmiervorrichtung ausgebildet, die Programmdaten vorgegeben zu komprimieren und über die weitere Kommunikationsschnittstelle an die jeweilige Steuervorrichtung zu senden. Die Kompression hat den Vorteil, dass die zu übertragende Datenmenge für die Programmdaten wesentlich geringer ist. Dies kann einen Beitrag leisten, eine Fehlerwahrscheinlichkeit bei der Übermittlung und die Übertragungszeitdauer zu reduzieren.

In einer weiteren vorteilhaften Ausgestaltung ist die Programmiervorrichtung ausgebildet, eine oder mehrere Dateien, die jeweils Programmdaten umfassen, in eine Containerdatei zusammenzufassen und über die weitere Kommunikationsschnittstelle an die jeweilige Steuervorrichtung zu senden. Dies ermöglicht, dass die Daten komprimiert an die jeweiligen Steuervorrichtungen übertragen werden können. Alternativ oder zusätzlich kann die Containerdatei verschlüsselt übertragen und/oder passwortgeschützt übertragen werden.

Gemäß einem dritten Aspekt zeichnet sich die Erfindung aus durch ein Programmiersystem, das zumindest eine Steuervorrichtung gemäß dem ersten Aspekt und eine Programmiervorrichtung gemäß dem zweiten Aspekt umfasst, wobei die Programmiervorrichtung mit der jeweiligen Steuervorrichtung gekoppelt ist. Vorteilhafte Ausgestaltungen des ersten und zweiten Aspekts gelten hierbei auch für den dritten Aspekt.

Ausführungsbeispiele der Erfindung sind im Folgenden anhand von schematischen Zeichnungen näher erläutert. Es zeigt:

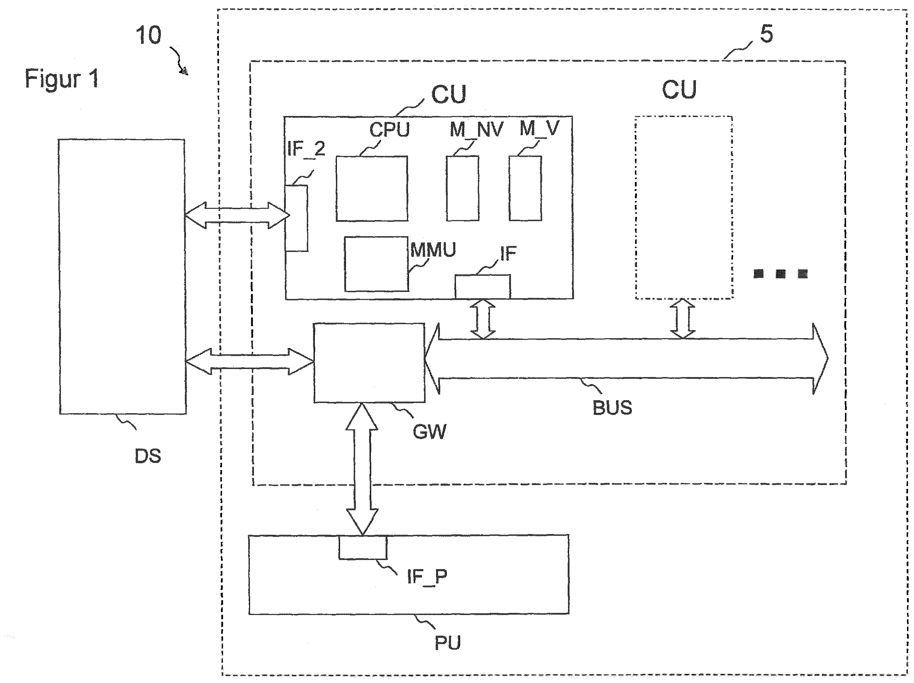

- Figur 1: ein erstes Ausführungsbeispiel eines Programmier-systems.

Das in Figur 1 gezeigte Programmiersystem 10 umfasst ein fahrzeugseitiges System 5 und eine fahrzeugexterne Programmiervorrichtung PU. Das fahrzeugseitige System 5 umfasst eine oder mehrere Steuervorrichtungen CU und beispielsweise einen oder mehre Fahrzeugdatenbusse sowie ein Gateway GW. Das Gateway GW koppelt beispielsweise mehrere Fahrzeugdatenbusse BUS und/oder das Gateway GW ermöglicht eine Kommunikation zu fahrzeugexternen Kommunikationseinheiten, beispielsweise über eine Mobilfunkverbindung. Alternativ ist möglich, dass das fahrzeugseitige System 5 mehrere Gateways GW umfasst.

Die jeweilige Steuervorrichtung CU umfasst eine Kommunikationsschnittstelle IF. Über die Kommunikationsschnittstelle IF können Daten von der Steuervorrichtung CU gesendet werden wie auch empfangen werden. Die Kommunikationsschnittstelle IF koppelt die Steuervorrichtung CU beispielsweise mit dem Fahrzeugdatenbus BUS des Kraftfahrzeugs. Der Fahrzeugdatenbus ist beispielsweise als Controller-Area-Network-Bus (CAN-Bus) ausgebildet. Grundsätzlich sind aber auch andere dem Fachmann bekannte Fahrzeugdatenbusse möglich.

Die Programmiervorrichtung PU kann beispielsweise in einer Test- und Diagnosevorrichtung angeordnet sein. Die Programmiervorrichtung kann beispielsweise in einer Fahrzeugfertigung und/oder einer Fahrzeugreparaturwerkstatt genutzt werden für die Programmierung zumindest eines Teils der Steuervorrichtung CU der jeweiligen Kraftfahrzeuge. Die Programmiervorrichtung PU weist beispielsweise eine weitere Kommunikationsschnittstelle IF_P auf, über die die Programmiervorrichtung PU koppelbar ist mit der jeweiligen Steuervorrichtung CU und/oder dem Fahrzeugdatenbus BUS. Über die weitere Kommunikationsschnittstelle IF_P können Daten von der Programmiervorrichtung PU gesendet und empfangen werden. Beispielsweise kann die Programmiervorrichtung PU unter Vermittlung des Gateways GW mit der jeweiligen Steuervorrichtung CU kommunizieren.

Die Steuervorrichtung CU umfasst eine Recheneinheit CPU. Die Recheneinheit CPU kann beispielsweise einen Mikrocontroller und/oder einen Mikroprozessor aufweisen. Die Recheneinheit CPU ist ausgebildet, Programme und Berechnungen auszuführen zur Steuerung und/oder Regelung weiterer Fahrzeugsysteme, zum Beispiel für eine Motorsteuerung, eine Abgasregelung und/oder eine Fahrdynamikregelung (ESP, Elektronisches Stabilitätsprogramm).

Ferner umfasst die Steuervorrichtung CU einen Programmspeicher M_NV. Die Recheneinheit CPU ist mit dem Programmspeicher M__NV gekoppelt. In dem Programmspeicher M_NV sind Programmdaten der jeweiligen Steuerprogramme, die von der Recheneinheit CPU ausgeführt werden, gespeichert. Der Programmspeicher M_NV ist beispielsweise als nichtflüchtiger Speicher ausgebildet, beispielsweise als Flash-Speicher. Der Programmspeicher M_NV ist beispielsweise neuprogrammierbar ausgebildet im Sinne, dass ein in dem Programmspeicher M_NV zuvor abgespeichertes Steuerprogramm zunächst zumindest teilweise gelöscht werden kann und ein dabei frei gewordener Speicherbereich mit Programmdaten eines aktuelleren Steuerprogramms oder eines anderen Steuerprogramms neu beschrieben werden kann. Die Neuprogrammierung, zum Beispiel des Flash-Speichers, ermöglicht eine Fehlerbehebung sowie eine Nachrüstung neuer Funktionen für die Steuervorrichtung CU. Der Programmspeicher M_NV kann auch einen Fehlerspeicher umfassen. In dem Fehlerspeicher können beispielsweise von der Steuervorrichtung CU erfasste Störungen des Kraftfahrzeugs und/oder erfasste technische Defekte gespeichert werden.

Die Steuervorrichtung CU kann beispielsweise eine flüchtige Speichereinheit M_V aufweisen, die beispielsweise als Random Access Memory (RAM-Speicher) ausgebildet ist.

Der Programmspeicher M_NV und/oder die flüchtige Speichereinheit M_V können in dem Mikrocontroller beziehungsweise dem Mikroprozessor angeordnet sein. Grundsätzlich können der Programmspeicher M_NV und/oder die flüchtige Speichereinheit M_V auch als externe Komponenten außerhalb des Mirocontrollers beziehungsweise des Mikroprozessors in der Steuervorrichtung CU angeordnet sein.

Die Steuervorrichtung CU ist ausgebildet, eine an der Kommunikationsschnittstelle IF bereitgestellte Programmdatenaktualisierungsaufforderung für zumindest ein zu aktualisierendes Steuerprogramm auszuwerten. Hierbei umfasst die Programmdatenaktualisierungsaufforderung zumindest eine Adresse einer von der Steuervorrichtung CU unabhängigen externen Datenquelle DS, von der jeweils aktuelle Programmdaten des zu aktualisierenden Steuerprogramms angefordert werden können. Des Weiteren ist die Steuervorrichtung CU ausgebildet, eine Programmdatenanforderung für die jeweiligen aktuellen Programmdaten an die externe Datenquelle DS über der Kommunikationsschnittstelle IF und/oder über eine zweite Kommunikationsschnittstelle IF_2 auszugeben. Die Steuervorrichtung CU ist ferner ausgebildet, die Programmdaten der jeweiligen Steuerprogramme, die in Antwort auf die Programmdatenanforderung an der Kommunikationsschnittstelle IF und/oder der zweiten Kommunikationsschnittstelle IF_2 anliegen, einzulesen und in dem Programmspeicher M_NV abzuspeichern.

Die für eine Programmierung der jeweiligen Steuervorrichtungen CU benötigten Steuerprogramme können somit von verschiedenen Quellen bereitgestellt werden. Die Programmdaten können beispielsweise von der Programmiervorrichtung PU bereitgestellt werden und die Steuervorrichtung CU kann ausgebildet sein, die Programmdaten von der Programmiervorrichtung PU anzufordern. Die Adresse kann beispielsweise einen Quellenanzeiger (Uniform Resource Locator, URL) aufweisen. Beispielsweise kann die zweite Kommunikationsschnittstelle IF_2 eine Luftschnittstelle umfassen, so dass die Steuervorrichtung CU direkt die Programmdaten von der Datenquelle DS herunterladen kann. Alternativ oder zusätzlich kann die Steuervorrichtung CU ausgebildet sein, über die Kommunikationsschnittstelle und das Gateway GW die Programmdaten herunterzuladen. Die Adresse kann alternativ oder zusätzlich einen Bezeichner, zum Beispiel eine Identifikationsnummer oder eine Nummer umfassen. In diesem Fall kann die Steuervorrichtung CU über die Kommunikationsschnittstelle IF, die zweite Kommunikationsschnittstelle IF_2 und/oder über das Gateway GW die Programmdaten von der Datenquelle DS anfordern, die dann die Programmdaten an die Steuervorrichtung CU übermittelt. Die Datenquelle DS kann beispielsweise als Server ausgebildet sein. Für die Übermittlung der Programmdaten kann beispielsweise ein Servertemplate genutzt werden. Für die Übertragung der Programmdaten kann beispielsweise ein Anwendungsprotokoll, das auf dem Internet Protokoll (IP) basiert, genutzt werden. Beispiele für solch ein Anwendungsprotokoll sind das Hypertext Transfer Protocol (http), das Hypertext Transfer Protocol Secure (https), das File Transfer Protocol (ftp) und rsync.

Die Programmiervorrichtung PU ist derart korrespondierend zu der Steuervorrichtung CU ausgebildet, sodass die Programmiervorrichtung PU eine Programmversion zumindest eines Steuerprogramms der jeweiligen Steuervorrichtung CU, mit der sie gekoppelt ist, abfragen kann, und wenn sie erkennt, dass das zumindest eine Steuerprogramm nicht in einer vorgegebenen Programmversion in der Steuervorrichtung CU abgespeichert ist, die Programmdatenaktualisierungsaufforderung über die weitere Kommunikationsschnittstelle IF_P an die jeweiligen Steuervorrichtung CU zu senden. Hierbei umfasst die Programmdatenaktualisierungsaufforderung die zumindest eine Adresse der von der Steuervorrichtung CU unabhängigen externen Datenquelle DS, von der jeweils die aktuellen Programmdaten des zu aktualisierenden Steuerprogramms angefordert werden können.

Die Steuervorrichtung CU kann ferner eine Speicherverwaltungseinheit MMU aufweisen. Die Speicherverwaltungseinheit MMU ist beispielsweise ausgebildet, einen Speicherbereich zu ermitteln für die Programmdaten der jeweiligen Steuerprogramme, die über die Kommunikationsschnittstelle IF und/oder die zweite Kommunikationsschnittstelle IF_2 eingelesen werden. Ferner ist die Speicherverwaltungseinheit MMU beispielsweise ausgebildet, die Programmdaten in dem ermittelten Speicherbereich abzuspeichern und die Programmdaten der Recheneinheit CPU zur Ausführung bereitzustellen.

Dies ermöglicht eine flexible Verwaltung des Programmspeichers M_NV der jeweiligen Steuervorrichtung CU beispielsweise unabhängig von einem vorgegebenen Speicherprogramm der externen Datenquelle DS. Die Steuervorrichtung CU kann beispielsweise unabhängig von einem Flash-Loader-Programm den Programmspeicher M_NV verwalten. Im Falle, dass die externe Datenquelle DS die Speicherverwaltung vorgibt, kann solch ein Flash-Loader-Programm beispielsweise von der externen Datenquelle DS an die Steuervorrichtung CU gesendet werden. Das Flash-Loader-Programm weist eine Speicherbefehlsfolge auf, sodass bei einer Ausführung des Flash-Loader-Programms die abzuspeichernden Programmdaten vorgegeben in dem Programmspeicher M_NV gespeichert werden. Die Speicherung der Programmdaten wird in diesem Fall von der externen Datenquelle DS vorgegeben, die auch die Programmiervorrichtung PU sein kann.

Die Steuervorrichtung CU kann ausgebildet sein, vorgegeben komprimierte Programmdaten, die über die Kommunikationsschnittstelle IF und/oder die zweite Kommunikationsschnittstelle IF_2 eingelesen werden, als solche zu erkennen und die komprimierten Programmdaten zu dekomprimieren. Für die Kompression der Daten kann beispielsweise eine Huffman-Codierung genutzt werden. Alternativ können weitere dem Fachmann bekannte Kompressionsverfahren genutzt werden.

Die Steuervorrichtung CU kann ferner ausgebildet sein, eine Containerdatei, die eine oder mehrere Dateien mit Programmdaten umfasst und die über die Kommunikationsschnittstelle IF und/oder die zweite Kommunikationsschnittstelle IF_2 eingelesen wird, als solche zu erkennen, und die Dateien aus der Containerdatei zu extrahieren. Die Containerdatei kann beispielsweise als komprimierte Archivdatei ausgebildet sein. Die Containerdatei kann beispielsweise ein ZIP-Dateiformat oder GZIP- oder ein TAR-Dateienformat aufweisen.

Die komprimierten Programmdaten und/oder die Containerdatei können beispielsweise von der Programmiervorrichtung PU und/oder von der externen Datenquelle DS bereitgestellt werden.

Die Steuervorrichtung CU kann ferner derart ausgebildet sein, dass für eine Programmierung der Steuervorrichtung CU mit Programmdaten, die in dem Programmspeicher gespeichert werden, eine vorgegebene Menge an Protokollen unterstützt sind. Des Weiteren kann die Steuervorrichtung CU ausgebildet sein, eine weitere Programmdatenaktualisierungsaufforderung für zumindest ein zu aktualisierendes Steuerprogramm, die an der Kommunikationsschnittstelle IF bereitgestellt wird, einzulesen und auszuwerten, wobei die weitere Programmdatenaktualisierungsaufforderung zumindest einen ersten Indikator umfasst, der mögliche Protokolle repräsentiert, die für das Programmieren mit aktualisierten Programmdaten des jeweiligen Steuerprogramms genutzt werden können. Die Steuervorrichtung CU ist ferner ausgebildet, jeweils abhängig von dem ersten Indikator einen zweiten Indikator zu ermitteln, der das Protokoll aus der Menge an Protokollen repräsentiert, welches für das Programmieren der Steuervorrichtung CU mit den Programmdaten des zu aktualisierenden Steuerprogramms genutzt werden soll. Die Steuervorrichtung CU ist ausgebildet, in Antwort auf die weitere Programmdatenaktualisierungsaufforderung eine weitere Programmdatenanforderung, die den zweiten Indikator umfasst, über die Kommunikationsschnittstelle IF zu versenden.

Die Programmiervorrichtung PU ist in diesem Zusammenhang beispielsweise ausgebildet, wenn sie erkennt, dass das zumindest eine Steuerprogramm nicht in der vorgegebenen Programmversion in der Steuervorrichtung CU abgespeichert ist, die weitere Programmdatenaktualisierungsaufforderung für zumindest das eine zu aktualisierende Steuerprogramm über die weitere Kommunikationsschnittstelle IF_P an die jeweilige Steuervorrichtung CU zu senden. Hierbei umfasst die weitere Programmdatenaktualisierungsaufforderung zumindest den ersten Indikator, der mögliche Protokolle repräsentiert, die für das Programmieren mit den aktualisierten Programmdaten des jeweiligen Steuerprogramms genutzt werden können. Die Programmiervorrichtung PU ist ferner ausgebildet, die in Antwort auf die weitere Programmdatenaktualisierungsaufforderung an der weiteren Kommunikationsschnittstelle IF_P bereitgestellte weitere Programmdatenanforderung auszuwerten, wobei die weitere Programmdatenanforderung den zweiten Indikator umfasst, der das von der jeweilige Steuervorrichtung CU ausgewählte Protokoll repräsentiert. Die Programmiervorrichtung ist ferner ausgebildet, abhängig von dem Auswerteergebnis die Programmierung mit den aktuellen Programmdaten gemäß dem jeweils ausgewählten Protokoll mittelbar und/oder direkt bereitzustellen.

Mögliche Protokolle sind beispielsweise das UDS-Protokoll und das Hyper Text Transfer Protocol (http).

Hierzu kann zunächst vorgesehen sein, dass die Steuervorrichtung CU und die Programmiervorrichtung PU während einer Vorbereitungsphase zunächst über ein erstes Protokoll, zum Beispiel das Unified Diagnostic Services Protokoll (UDS-Protokoll), kommunizieren. Beispielsweise kann vorgesehen sein, dass das UDS-Protokoll erweitert wird mit einem Dienst zur Abfrage eines gewünschten Protokolls für den Datenaustausch zwischen der Steuervorrichtung CU und der Programmiervorrichtung PU, insbesondere für die Programmierung der Steuervorrichtung CU. Beispielsweise kann vorgesehen sein, dass solch eine Abfrage für jedes Steuerprogramm, das aktualisiert werden soll, einzeln erfolgt. Alternativ ist möglich, dass solch eine Abfrage erfolgt für mehrere Steuerprogramme, die zu aktualisieren sind. Der erste und zweite Indikator kann jeweils einen vorgegebenen Code aufweisen, der es ermöglicht, das mögliche beziehungsweise das gewünschte Protokoll zu ermitteln.

Die Programmiervorrichtung PU unterstützt vorzugsweise die für die Programmierung der Steuervorrichtung CU möglichen Protokolle, wobei Unterstützen in dem Sinne zu verstehen ist, dass Programmiervorrichtung PU ausgebildet ist, die Programmierung mit den aktuellen Programmdaten gemäß dem jeweils ausgewählten Protokoll mittelbar und/oder direkt bereitzustellen

Die Programmiervorrichtung PU ist beispielsweise derart ausgebildet, dass wenn sie selbst die Programmierung der Steuervorrichtung CU gemäß dem gewünschten Protokoll ausführen kann, sie die Programmierung der jeweiligen Steuervorrichtung CU mit den aktuellen Programmdaten gemäß dem jeweils ausgewählten Protokoll direkt bereitstellt, beispielsweise durch ein direktes Senden der Programmdaten an die Steuervorrichtung CU. Die Programmiervorrichtung PU kann ausgebildet sein, wenn sie nicht selbst die Programmierung mit dem gewünschten Protokoll ausführen kann, in Antwort auf die weitere Programmdatenanforderung der Steuervorrichtung CU, die Programmdatenaktualisierungsaufforderung an die Steuervorrichtung CU zu senden, die zumindest die eine Adresse der externen Datenquelle DS umfasst, von der jeweils die aktuellen Programmdaten gemäß dem gewünschten Protokoll von der Steuervorrichtung CU angefordert werden kann. Die Programmiervorrichtung PU stellt in diesem Fall die Programmierung mit den aktuellen Programmdaten gemäß dem jeweils ausgewählten Protokoll mittelbar bereit. Alternativ oder zusätzlich kann die Programmiervorrichtung PU ausgebildet sein, unabhängig davon, ob sie die Programmierung mit dem gewünschten Protokoll ausführen kann oder nicht, in Antwort auf die weitere Programmdatenanforderung der Steuervorrichtung CU die Programmdatenaktualisierungsaufforderung an die Steuervorrichtung CU zu senden.

Optional kann vorgesehen sein, dass die Programmiervorrichtung PU bei Bedarf die Wahl des Protokolls der Steuervorrichtung CU ignorieren kann und ein anderes Protokoll nutzen kann, das die Steuervorrichtung CU ebenfalls unterstützt.

### Bezugszeichenliste:

- 5: fahrzeugseitiges System
- 10: Programmiersystem
- BUS: Fahrzeugdatenbus
- CPU: Recheneinheit
- CU: Steuervorrichtung
- DS: externe Datenquelle
- GW: Gateway
- IF: Kommunikationsschnittstelle
- IF_2: zweite Kommunikationsschnittstelle
- IF_P: weitere Kommunikationsschnittstelle der Programmiervorrichtung
- M_NV: Programmspeicher
- M_V: flüchtige Speichereinheit
- MMU: Speicherverwaltungseinheit
- PU: Programmiervorrichtung

## Patentansprüche

1. Steuervorrichtung (CU) für ein Kraftfahrzeug, die aufweist:
- zumindest eine Recheneinheit (CPU), die ausgebildet ist, ein oder mehrere Steuerprogramme auszuführen,
- zumindest eine Kommunikationsschnittstelle (IF) zum Senden und Empfangen von Daten,
- zumindest einen Programmspeicher (M_NV) zum Speichern von Programmdaten der jeweiligen Steuerprogramme, wobei die Steuervorrichtung (CU) ausgebildet ist:
- eine an der Kommunikationsschnittstelle (IF) bereitgestellte Programmdatenaktualisierungsaufforderung für zumindest ein zu aktualisierendes Steuerprogramm auszuwerten, wobei die Programmdatenaktualisierungsaufforderung zumindest eine Adresse einer von der Steuervorrichtung (CU) unabhängigen externen Datenquelle (DS) umfasst, von der jeweils aktuelle Programmdaten des zu aktualisierenden Steuerprogramms angefordert werden können,
- eine Programmdatenanforderung für die jeweiligen aktuellen Programmdaten an die externe Datenquelle (DS) über der Kommunikationsschnittstelle (IF) und/oder über eine zweite Kommunikationsschnittstelle (IF_2) auszugeben,
- die Programmdaten der jeweiligen Steuerprogramme, die in Antwort auf die Programmdatenanforderung an der Kommunikationsschnittstelle (IF) und/oder der zweiten Kommunikationsschnittstelle (IF_2) anliegen, einzulesen und in dem Programmspeicher (M_NV) abzuspeichern, und die ausgebildet ist:
- für eine Programmierung der Steuervorrichtung (CU) mit Programmdaten, die in einem Programmspeicher (M_NV) vorgegeben abgespeichert werden, eine vorgegebene Menge an Protokollen zu unterstützen,
- eine weitere Programmdatenaktualisierungsaufforderung für zumindest ein zu aktualisierendes Steuerprogramm, die an der Kommunikationsschnittstelle (IF) bereitgestellt wird, einzulesen und auszuwerten, wobei die weitere Programmdatenaktualisierungsaufforderung zumindest einen ersten Indikator umfasst, der mögliche Protokolle repräsentiert, die für das Programmieren mit aktualisierten Programmdaten des jeweiligen Steuerprogramms genutzt werden können,
- jeweils abhängig von dem ersten Indikator einen zweiten Indikator zu ermitteln, der das Protokoll aus der Menge an Protokollen repräsentiert, welches für das Programmieren der Steuervorrichtung (CU) mit den Programmdaten des zu aktualisierenden Steuerprogramms genutzt werden soll, und
- in Antwort auf die weitere Programmdatenaktualisierungsaufforderung eine weitere Programmdatenanforderung, die den zweiten Indikator umfasst, über die Kommunikationsschnittstelle (IF) zu versenden.

2. Steuervorrichtung (CU) nach Anspruch 1,
die eine Speicherverwaltungseinheit (MMU) umfasst, die ausgebildet ist,
- einen Speicherbereich zu ermitteln für die Programmdaten der jeweiligen Steuerprogramme, die über die Kommunikationsschnittstelle (IP) und/oder die zweite Kommunikationsschnittstelle (IF_2) eingelesen werden,
- die Programmdaten in dem ermittelten Speicherbereich abzuspeichern und
- die Programmdaten der Recheneinheit (CPU) zur Ausführung bereitzustellen.

3. Steuervorrichtung (CU) nach einem der vorstehenden Ansprüche,
die ausgebildet ist, vorgegebene komprimierte Programmdaten, die über die Kommunikationsschnittstelle (IF) und/oder die zweite Kommunikationsschnittstelle (IF_2) eingelesen werden, als solche zu erkennen und die komprimierten Programmdaten zu dekomprimieren.

4. Steuervorrichtung (CU) nach einem der vorstehenden Ansprüche,
die ausgebildet ist, eine Containerdatei, die eine oder mehrere Dateien mit Programmdaten umfasst und die über die Kommunikationsschnittstelle (IF) und/oder die zweite Kommunikationsschnittstelle (IF_2) eingelesen wird, als solche zu erkennen und die Dateien aus der Containerdatei zu extrahieren.

5. Programmiervorrichtung (PU) für zumindest eine Steuervorrichtung (CU) eines Kraftfahrzeugs, die eine weitere Kommunikationsschnittstelle (IF_P) aufweist, über die die Programmiervorrichtung (PU) koppelbar ist mit der jeweiligen Steuervorrichtung (CU) und die ausgebildet ist:
- eine Programmversion zumindest eines Steuerprogramms der jeweiligen Steuervorrichtung (CU), mit der sie gekoppelt ist, abzufragen, und wenn sie erkennt, dass das zumindest eine Steuerprogramm nicht in einer vorgegebenen Programmversion in der Steuervorrichtung (CU) abgespeichert ist, eine Programmdatenaktualisierungsaufforderung über die weitere Kommunikationsschnittstelle (IF_P) an die jeweilige Steuervorrichtung (CU) zu senden, wobei die Programmdatenaktualisierungsaufforderung zumindest eine Adresse einer von der Steuervorrichtung (CU) unabhängigen externen Datenquelle (DS) umfasst, von der jeweils aktuelle Programmdaten des zu aktualisierenden Steuerprogramms angefordert werden können, wobei die Programmiervorrichtung ausgebildet ist,
- wenn sie erkennt, dass das zumindest eine Steuerprogramm nicht in einer vorgegebenen Programmversion in der Steuervorrichtung (CU) abgespeichert ist, eine weitere Programmdatenaktualisierungsaufforderung für zumindest das eine zu aktualisierende Steuerprogramm über die weitere Kommunikationsschnittstelle (IF_P) an die jeweilige Steuervorrichtung (CU) zu senden, wobei die weitere Programmdatenaktualisierungsaufforderung zumindest einen ersten Indikator umfasst, der mögliche Protokolle repräsentiert, die für das Programmieren mit aktualisierten Programmdaten des jeweiligen Steuerprogramms genutzt werden können,
- eine in Antwort auf die weitere Programmdatenaktualisierungsaufforderung an der weiteren Kommunikationsschnittstelle (IP_P) bereitgestellte weitere Programmdatenanforderung auszuwerten, wobei die weitere Programmdatenanforderung einen zweiten Indikator umfasst, der ein von der jeweiligen Steuervorrichtung (CU) ausgewähltes Protokoll repräsentiert, und
- abhängig von dem Auswerteergebnis die Programmierung mit den aktuellen Programmdaten gemäß dem jeweils ausgewählten Protokoll mittelbar und/oder direkt bereitzustellen.

6. Programmiervorrichtung (PU) nach Anspruch 5, die ausgebildet ist, die Programmdaten vorgegeben zu komprimieren und über die weitere Kommunikationsschnittstelle (IF_P) an die jeweilige Steuervorrichtung (CU) zu senden.

7. Programmiervorrichtung (PU) nach einem der vorstehenden Ansprüche 4 bis 6,
die ausgebildet ist, eine oder mehrere Dateien, die jeweils Programmdaten umfassen, in eine Containerdatei zusammenzufassen und über die weitere Kommunikationsschnittsteile (IF_P) an die jeweilige Steuervorrichtung (CU) zu senden.

8. Programmiersystem (10) aufweisend:
- zumindest eine Steuervorrichtung (CU) gemäß einem der Ansprüche 1 bis 4 und
- eine Programmiervorrichtung (PU) gemäß einem der Ansprüche 5 bis 7, die mit der jeweiligen Steuervorrichtung (CU) gekoppelt ist.

## Claims

1. A control unit (CU) for a motor vehicle, said control unit having:
- at least one processing unit (CPU), which is configured to execute one or more control programs;
- at least one communication interface (IF) for transmitting and receiving data;
- at least one program memory (M_NV) for storing program data of said control program(s), wherein the control unit (CU) is configured to:
- evaluate a program data update request, provided at the communication interface (IF), for at least one control program to be updated, wherein the program data update request comprises at least an address of an external data source (DS), which is independent of the control unit(CU) and from which current program data of the control program to be updated can be requested;
- output a program data request for the relevant current program data to the external data source (DS) over the communication interface (IF) and/or over a second communication interface (IF_2),
- read in and store in the program memory (M_NV) the program data of the relevant control programs provided at the communication interface (IF) and/or the second communication interface (IF_2) in response to the program data request, and is configured to:
- support a predefined amount of protocols for a programming of the control unit (CU) with program data stored in a predefined manner in a program memory (M_NV),
- read in and evaluate a further program data update request for at least one control program to be updated, which request is provided at the communication interface (IF), wherein the further program data update request comprises at least one first indicator, which represents possible protocols which can be used for the programming of the relevant control program with updated program data,
- determine a second indicator, in each case depending on the first indicator, which second indicator represents the protocol from the quantity of protocols that is to be used for the programming of the control unit (CD) with the program data of the control program to be updated, and
- in response to the further program data update request, send a further program data requestoverthe communication interface (IF), which further program data request comprises the second indicator.

2. A control unit (C U) according to claim 1,
comprising a memory management unit (MMU), which is configured to:
- determine a memory region for the program data of the relevant control programs read in over the communication interface (IP) and/or the second communication interface (IF_2),
- store the program data in the determined memory region, and
- provide the program data to the processing unit (CPU) for execution.

3. A control unit (CU) according to either one of the preceding claims, configured to identify predefined compressed program data, which are read in over the communication interface (IF) and/or the second communication interface (IF_2), and to decompress the compressed program data.

4. A control unit(CU) according to any one of the preceding claims, configured to identify a container file, which comprises one or more files with program data and which is read in over the communication interface (IF) and/or the second communication interface (IF_2), and to extract the files from the container file.

5. A programming unit (PU) for at least one control unit (CD) of a motor vehicle, which programming unit has a further communication interface (IF_P), by means of which the programming unit (PU) can be coupled to a particular control unit (CU), and is configured to:
- query a program version of at least one control program of the relevant control unit (CU), to which it is coupled, and, if it identifies that the at least one control program is not stored in the control unit (CU) in a predefined program version, to send a program data update request to the relevant control unit (CU) over the communication interface (IF_P), wherein the program data update request comprises at least an address of an external data source (DS), which is independent of the control unit (CU) and from which the current program data of the control program to be updated can be requested, wherein the programming unit is configured:
- to send to the relevant control unit (CU) over the further communication interface (IF_P) a further program data update request for at least the one control program to be updated if it identifies that the at least one control program is not stored in the control unit(CU) in a predefined program version, wherein the further program data update request comprises at least one first indicator, which represents possible protocols which can be used for the programming of the relevant control program with updated program data;
- to evaluate a further program data request provided in response to the further program data update request at the further communication interface (IP_P), wherein the further program data request comprises a second indicator, which represents a protocol selected from the relevant control unit (CD), and
- depending on the evaluation result, to provide the programming with the current program data in accordance with the selected protocol indirectly and/or directly.

6. A programming unit (PU) according to claim 5, configured to compress the program data in a predefined manner and to send it to the relevant control unit (CU) over the further communication interface (IF_P).

7. A programming unit(PU) according to any one of preceding claims 4 to 6,
configured to combine one file or a plurality of files, which in each case comprises/comprise program data, in a container file and to send the container file to the relevant control unit (CU) over the further communication interface (IF_P).

8. A programming system (10) having:
- at least one control unit (CD) according to any one of claims 1 to 4, and
- a programming unit (PU) according to any one of claims 5 to 7, which is coupled to a particular control unit (CU).

## Revendications

1. Dispositif de commande (CU) destiné à un véhicule qui comporte :
- au moins une unité de calcul (CPU) qui est réalisée pour mettre en oeuvre un ou plusieurs programme(s) de commande,
- au moins une interface de communication (IF) permettant de transmettre et de recevoir des données,
- au moins une mémoire de programme (M_NV) permettant de stocker des données de programme des programmes de commande respectifs, le dispositif de commande (CU) étant réalisé :
- pour permettre d'évaluer une demande d'actualisation de données de programme fournie à l'in terface de communication (IF) pour au moins un programme de commande à actualiser, la demande d'actualisation de données de programme comprenant au moins une adresse d'une source de données externe (DS) indépendante du dispositif de commande (CU), par laquelle des données de programme actuelles respectives du programme de commande à actualiser peuvent être requises,
- pour permettre de délivrer une requête de données de programme pour les données de programme actuelles respectives à la source de données externe (DS) par l'intermédiaire de l'interface de communication (IF) et/ou par l'intermédiaire d'une seconde interface de communication (IF_2),
- pour permettre de lire les données de programme des programmes de commande respectifs transmises en réponse à la requête de données de programme à l'interface de communication (IF) et/ou à la seconde interface de communication (IF_2), et de les sauvegarder dans la mémoire de programme (M_NV), et qui est réalisée :
- pour permettre d'assister une quantité prédéfinie de protocoles, pour permettre une programmation du dispositif de commande (CU) avec des données de programme qui sont sauvegardées de façon prédéfinie dans une mémoire de programme (M_NV),
- pour permettre de lire et d'évaluer une autre demande d'actualisation de données de programme pour le programme de commande à actualiser qui est fournie à l'interface de communication (IF), l'autre demande d'actualisation de données de programme comprenant au moins un premier indicateur qui représente des protocoles possibles qui peuvent être utilisés pour permettre la programmation avec des données de programme actualisées du programme de commande respectif,
- pour permettre de déterminer respectivement en fonction du premier indicateur, un autre indicateur qui représente le protocole parmi l'ensemble de protocoles, qui doit être utilisé pour la programmation du dispositif de commande (CU) avec les données de programme du programme de commande à actualiser, et
- pour permettre de transmettre en réponse à l'autre demande d'actualisation de données de programme, une autre requête de données de programme qui comprend le second indicateur par l'intermédiaire de l'interface de communication (IF).

2. Dispositif de commande (CU) conforme à la revendication 1,
qui comporte une unité de gestion de mémoire (MMU) qui est réalisée pour permettre :
- de déterminer une zone de mémoire pour les données de programme des programmes de commande respectifs qui sont lues par l'intermédiaire de l'interface de communication (IP) et/ou de la seconde interface de communication (IF_2),
- de sauvegarder les données de programme dans la zone de mémoire déterminée, et
- de fournir les données de programme à l'unité de calcul (CPU) pour permettre leur mise en oeuvre.

3. Dispositif de commande (CU) conforme à l'une des revendications précédentes qui est réalisé pour permettre d'identifier en tant que telles des données de programme comprimées prédéfinies qui sont lues par l'intermédiaire de l'interface de communication (IF) et/ou de la seconde interface de communication (IF_2) et de décomprimer les données de programme comprimées.

4. Dispositif de commande (CU) conforme à l'une des revendications précédentes, réalisé pour permettre d'identifier en tant que tel un fichier conteneur qui comporte un ou plusieurs fichier(s) avec des données de programme et qui est lu par l'intermédiaire de l'interface de communication (IF) et/ou de la seconde interface de communication (IF_2), et d'extraire les fichiers du fichier conteneur.

5. Dispositif de programmation (PU) destiné à au moins un dispositif de commande (CU) d'un véhicule, qui comporte une autre interface de communication (IF_P) par l'intermédiaire de laquelle le dispositif de programmation (PU) peut être couplé avec le dispositif de commande (CU) respectif, et qui est réalisé pour permettre :
- de consulter une version de programme d'au moins un programme de commande du dispositif de commande (CU) respectif avec lequel il est couplé, et lorsqu'il identifie que le programme de commande n'est pas sauvegardé dans une version de programme prédéfinie dans le dispositif de commande (CU) de transmettre une demande d'actualisation de données de programme par l'intermédiaire de l'autre interface de communication (IF_P) au dispositif de commande (CU) respectif, la demande d'actualisation de données de programme comprenant au moins une adresse d'une source de données externe (DS) indépendante du dispositif de commande (CU), par laquelle des données de programme actuelles respectives du programme de commande à actualiser peuvent être requises, le dispositif de programmation étant réalisé pour permettre :
- lorsqu'il identifie que le programme de commande n'est pas sauvegardé dans une version de programme prédéfinie dans le dispositif de commande (CU) de transmettre au dispositif de commande (CU) respectif, une autre demande d'actualisation de données de programme pour le programme de commande à actualiser par l'intermédiaire de l'autre interface de communication (IF_P), l'autre demande d'actualisation de données de programme comprenant au moins un premier indicateur qui représente des protocoles possibles qui peuvent être utilisés pour permettre la programmation avec des données de programme actualisé du programme de commande respectif,
- d'évaluer une autre requête de données de programme fournie en réponse à l'autre demande d'actualisation de données de programme à l'autre interface de communication (IP_P), l'autre requête de données de programme comprenant un second indicateur qui représente un protocole choisi par le dispositif de commande (CU) respectif, et
- en fonction du résultat de l'évaluation de fournir indirectement et/ou directement la programmation avec les données de programme actuelles conformément au protocole respectivement choisi.

6. Dispositif de programmation (PU) conforme à la revendication 5,
qui est réalisé pour permettre de comprimer les données de programme de façon prédéfinie et de les transmettre par l'intermédiaire de l'autre interface de communication (IF_P) au dispositif de commande (CU) respectif.

7. Dispositif de programmation (PU) conforme à l'une des revendications précédentes 4 à 6,
qui est réalisé pour permettre de rassembler dans un fichier conteneur un ou plusieurs fichier(s) qui comportent chacun des données de programme et de la transmettre au dispositif de commande (CU) respectif par l'intermédiaire de l'autre interface de communication (IF_P).

8. Système de programmation (10) comprenant :
- au moins un dispositif de commande (CU) conforme à l'une des revendications 1 à 4, et
- un dispositif de programmation (PU) conforme à l'une des revendications 5 à 7, qui est couplé au dispositif de commande (CU) respectif.
